# EUROPEAN PATENT APPLICATION

(11) **EP 2 278 655 A1**
(43) Date of publication of application: **26.01.2011**
(21) Application number: 09807694.6
(22) Date of filing: 06.03.2009
(51) Int. Cl.: H01M 12/08

(54) **AIR ELECTRODE AND NON-AQUEOUS AIR BATTERY**

(71) Applicant: Toyota Jidosha Kabushiki Kaisha, Toyota-shi, Aichi 471-8571 (JP)
(72) Inventor: NAKANISHI, Shinji, Toyota-shi Aichi 471-8571 (JP)
(74) Representative: Winter, Brandl, Fürniss, Hübner, Röss, Kaiser, Polte - Partnerschaft
(86) International application number: PCT/JP2009/054296
(87) International publication number: WO 2010/100752

(57) **Abstract**

A main object of the present invention is to provide an air cathode with great discharged capacity per unit area. The present invention solves the above-mentioned problems by providing an air cathode used for a nonaqueous air battery, comprising: an air cathode current collector having a porous structure and an air cathode layer containing a conductive material and formed on the air cathode current collector, wherein the average supporting amount of the a conductive material in a planar area of the air cathode is within a range of 0.3 mg/cm² to 9.0 mg/cm².

## Description

### Technical Field

The present invention relates to an air cathode with great discharged capacity per unit area, and a nonaqueous air battery using the same.

### Background Art

A nonaqueous air battery is a battery using air (oxygen) as a cathode active material, and has advantages such as that energy density is high and downsizing and weight saving are easy. Thus, a nonaqueous air battery has been presently noted as a higher-capacity battery than a widely used lithium battery.

Such a nonaqueous air battery, for example, comprises: an air cathode layer having a conductive material (such as carbon black), a catalyst (such as manganese dioxide), and a binder (such as polyvinylidene fluoride), an air cathode current collector for performing current collecting of the air cathode layer, an anode layer containing an anode active material (such as metal Li), an anode current collector for performing current collecting of the anode layer, and a nonaqueous liquid electrolyte for conducting a metal ion (such as Li ion). A nonaqueous electrolyte battery having a cathode (an air cathode) mainly composed of a carbonaceous material such that pore volume occupied by pores with a diameter of 1 nm or more is 1.0 ml/g or more is disclosed in Patent Document 1.

Patent Document 1: Japanese Patent Application Publication (JP-A) No. 2002-015737

### Disclosure of the Invention

### Problems to be Solved by the Invention

An air cathode of a conventional nonaqueous air battery has a problem that its discharged capacity per unit area is small. The present invention has been made in view of the above-mentioned problem, and a main object thereof is to provide an air cathode with great discharged capacity per unit area.

### Means for Solving the Problem

In order to solve the above-mentioned problem, the present invention provides an air cathode used for a nonaqueous air battery, comprising: an air cathode current collector having a porous structure, and an air cathode layer containing a conductive material and formed on the air cathode current collector; **characterized in that** an average supporting amount of the conductive material in a planar area of the air cathode is within a range of 0.3 mg/cm² to 9.0 mg/cm².

According to the present invention, an air cathode with great discharged capacity per unit area can be obtained by determining the average supporting amount of a conductive material in a planar area of an air cathode within the above-mentioned range.

In the above-mentioned invention, the average supporting amount of the conductive material in a planar area of the air cathode is preferably within a range of 0. 5 mg/cm² to 8.0 mg/cm². The reason therefor is that discharged capacity per unit area can be further raised.

In the above-mentioned invention, the conductive material is preferably a powder carbon material. The reason therefor is to be for general purpose use.

In the above-mentioned invention, the air cathode current collector is preferably a current collector using a carbon material. The reason therefor is to be excellent in corrosion resistance.

The present invention also provides a nonaqueous air battery comprising the above-mentioned air cathode, an anode, and a nonaqueous liquid electrolyte.

According to the present invention, the use of the above-mentioned air cathode allows a nonaqueous air battery excellent in discharged capacity per unit area of the air cathode.

### Effect of the Invention

The present invention brings the effect that discharged capacity per unit area of the air cathode can be increased.

### Brief Description of the Drawings

FIG. 1 is a schematic cross-sectional view showing one example of an air cathode of the present invention.
FIG. 2 is a schematic cross-sectional view showing one example of a nonaqueous air battery of the present invention.
FIG. 3 is a schematic cross-sectional view showing an evaluation cell used in examples.
FIG. 4 is a charge and discharge curve of an evaluation cell obtained in Example 5.
FIG. 5 is a graph showing a relation between the average supporting amount of carbon and discharged capacity per unit area.
FIG. 6 is a graph showing a relation between the average supporting amount of carbon and charging efficiency.

### Description of Reference Numerals

- 1: Air cathode current collector
- 2: Conductive material
- 3: Air cathode layer
- 10: Air cathode
- 11a: Anode case
- 11b: Air cathode case
- 12: Anode current collector
- 12a: Anode lead
- 13: Anode layer
- 14: Air cathode layer
- 15: Air cathode current collector
- 15a: Air cathode lead
- 16: Separator
- 17: Nonaqueous liquid electrolyte
- 18: Microporous membrane
- 19: Packing
- 20: Nonaqueous air battery

### Best Mode for Carrying Out the Invention

An air cathode and a nonaqueous air battery of the present invention are hereinafter described in detail.

### A. Air cathode

First, an air cathode of the present invention is described. The air cathode of the present invention is an air cathode used for a nonaqueous air battery, comprising: an air cathode current collector having a porous structure and an air cathode layer containing a conductive material and formed on the air cathode current collector, **characterized in that** an average supporting amount of the conductive material in a planar area of the air cathode is within a range of 0.3 mg/cm² to 9.0 mg/cm².

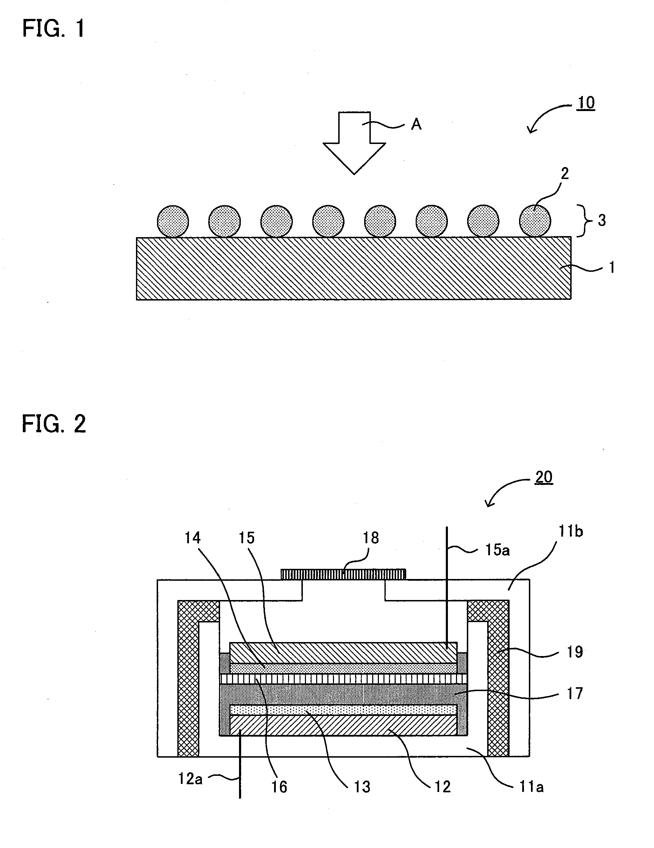

FIG. 1 is a schematic cross-sectional view showing one example of the air cathode of the present invention. The air cathode 10 shown in FIG. 1 comprises an air cathode current collector 1 having a porous structure, and an air cathode layer 3 containing a conductive material 2 (such as ketjen black) and formed on the air cathode current collector 1. Although not shown, the air cathode layer 3 may further contain at least one of a catalyst and a binder. The present invention is greatly **characterized in that** the average supporting amount of the conductive material 2 in a planar area of the air cathode 10 is within the predetermined range.

Here, the "average supporting amount of the conductive material in a planar area of the air cathode" is denoted by (the weight of the conductive material included in a planar area of the air cathode) / (the area of the planar area of the air cathode). The "planar area of the air cathode" specifically signifies the area of the air cathode 10 viewed horizontally from the direction "A" in FIG. 1, which is an effective area usable as the air cathode. Thus, for example, in the case where the area with no conductive materials on the air cathode current collector exists along the outer edge of the air cathode current collector, the area is not included in the planar area of the air cathode. The average supporting amount "S" of the conductive material in a planar area of the air cathode may be calculated by the following formulae (1) to (3), for example.
(1) the weight of the air cathode layer (mg) = the weight of the whole air cathode (mg) - the weight of the air cathode current collector (mg)
(2) the weight of the conductive material included in a planar area (mg) = the weight of the air cathode layer (mg) x (the ratio of the conductive material to the whole air cathode layer (weight ratio))
(3) the average supporting amount S (mg/cm²) = the weight of the conductive material included in the planar area (mg) / the area of the planar area (cm²)

According to the present invention, the air cathode with great discharged capacity per unit area can be obtained by determining the average supporting amount of the conductive material in the planar area of the air cathode within the above-mentioned range. The "discharged capacity per unit area" signifies discharged capacity per unit area in the planar area of the air cathode. In the air cathode of the present invention, the reason why discharged capacity per unit area is increased is not clear, but the reason is considered that blocking due to discharge products (including Li₂O and Li₂O₂ in the case of a lithium air battery) may be restrained. That is to say, on the occasion when discharge products are caused in accordance with discharge, a conventional air cathode is so large in the average supporting amount of the conductive material that blocking due to discharge products is easily caused on the surface and the inside of the air cathode and nonaqueous liquid electrolyte is easily hindered from moving. As a result, it is conceived that discharged capacity per unit area is decreased. On the contrary, with regard to the air cathode of the present invention, it is conceived that the average supporting amount of the conductive material is determined within the above-mentioned range, so that blocking due to discharge products may be restrained to allow the air cathode with great discharged capacity per unit area.

In particular, the air cathode of the present invention is preferably used for a nonaqueous air secondary battery. If blocking due to discharge products is caused in when charge starts, it becomes difficult for oxygen gas caused at the time of decomposing the discharge products to pass through for the outside of the air cathode. Then the problem arises that charging voltage is increased and the discharge products may not be decomposed with high efficiency. The air cathode of the present invention can solve the above-mentioned problem because blocking due to discharge products is caused with difficulty.

The air cathode of the present invention has the air cathode current collector having a porous structure and the air cathode layer. The air cathode of the present invention is hereinafter described in each configuration.

### 1. Air cathode layer

The air cathode layer of the present invention is a layer containing a conductive material, which is formed on the air cathode current collector. The average supporting amount of the conductive material in the planar area of the air cathode is ordinarily within a range of 0.3 mg/cm² to 9.0 mg/cm². In addition, the average supporting amount of the conductive material is preferably 0.5 mg/cm² or more. On the other hand, the average supporting amount of the conductive material is preferably 8.0 mg/cm² or less, and more preferably 6.0 mg/cm² or less. The reason therefor is that the average supporting amount within the above-mentioned range allows the air cathode with greater discharged capacity per unit area in the planar area. The conductive material in the planar area is preferably supported more uniformly. In particular, in the present invention, the supporting amount of the conductive material is preferably within the above-mentioned range in an optional area in the planar area.

The conductive material used for the air cathode layer is not particularly limited if it has electrical conductivity; examples thereof include a powder carbon material. In addition, this powder carbon material may or may not have a porous structure, and yet preferably have a porous structure in the present invention. The reason therefor is that specific surface area is so large as to provide many reaction fields. Specific examples of the powder carbon material having a porous structure include mesoporous carbon. On the other hand, specific examples of the powder carbon material not having a porous structure include graphite, acetylene black, ketjen black, carbon nanotube, and carbon fiber.

The average particle diameter (primary particle diameter) of the powder carbon material is preferably, for example, within a range of 1 nm to 30 µm, above all, within a range of 5 nm to 10 µm, and in particular, within a range of 10 nm to 0.5 µm. The reason therefor is that the average particle diameter within the above-mentioned range allows the air cathode excellent in discharged capacity per unit area.

The air cathode layer of the present invention may contain a catalyst in addition to the conductive material. The addition of a catalyst allows electrode reaction to be performed more smoothly. In particular, in the present invention, a catalyst is preferably supported on the conductive material. The reason therefor is that catalytic functionmaybe effectively performed. Examples of the above-mentioned catalyst include oxide catalysts such as manganese dioxide (MnO₂) and cerium dioxide (CeO₂), macrocyclic compounds such as phthalocyanine and porphyrin, and a complex such that transition metal (such as Co) is coordinated to the above-mentioned macrocyclic compounds.

The average particle diameter of the catalyst is preferably, for example, within a range of 0.1 µm to 30 µm, above all, within a range of 0.3 µm to 20 µm, and in particular, within a range of 0.5 µm to 5 µm. The reason therefor is that too small average particle diameter brings a possibility of making the preparation of the catalyst difficult, and too large average particle diameter brings a possibility of being incapable of effectively promoting electrode reaction. The ratio of the catalyst in the air cathode layer is preferably, for example, within a range of 3 parts by weight to 100 parts by weight, above all, within a range of 5 parts by weight to 50 parts by weight, and in particular, within a range of 10 parts by weight to 30 parts by weight in the case where the conductive material is regarded as 100 parts by weight. The reason therefor is that too small ratio of the catalyst brings a possibility of being incapable of performing sufficient catalytic function, and too large ratio of the catalyst brings a possibility of developing no differences in the effect.

The air cathode layer of the present invention may contain a binder in addition to the conductive material. The addition of a binder allows the conductive material to be stably fixed. A binder for fixing the conductive material may be contained. Examples of the binder include fluorine-containing binders such as polyvinylidene fluoride (PVDF) and polytetrafluoroethylene (PTFE). The use of gel polymer electrolyte as the binder allows binding properties and ion conductivity to be simultaneously performed. The ratio of the binder in the air cathode layer is preferably, for example, within a range of 0. 5 part by weight to 20 parts by weight, above all, within a range of 1 part by weight to 10 parts by weight, and in particular, within a range of 2 parts by weight to 6 parts by weight in the case where the conductive material is regarded as 100 parts by weight. The reason therefor is that too small ratio of the binder brings a possibility of not allowing the air cathode with favorable durability, and too large ratio of the binder brings a possibility of hindering electrode reaction.

### 2. Air cathode current collector

The air cathode current collector of the present invention has a porous structure and supports the above-mentioned conductive material. The porous structure allows diffusion of oxygen to be promptly performed. Examples of the porous structure include mesh structure, nonwoven fabric structure, and three-dimensional network structure.

Examples of a material for the air cathode current collector include a metallic material and a carbon material, above all, preferably, a carbon material. The reason therefor is that a carbon material has the advantages of being excellent in corrosion resistance, being excellent in electronic conductivity, and being so light as compared with metal that energy densityper weight is increased. Examples of such a carbon material include carbon fiber. In addition, examples of kinds of carbon fiber include PAN carbon fiber and pitch carbon fiber.

Examples of the air cathode current collector using carbon fiber include a carbon cloth and a carbon paper. The carbon cloth generally signifies carbon fibers knitted up regularly (corresponding to the above-mentioned mesh structure). The carbon paper generally signifies carbon fibers arrayed randomly (corresponding to the above-mentioned nonwoven fabric structure). The carbon cloth and carbon paper may be subject to sintering treatment and activating treatment. An activated carbon plate (corresponding to the above-mentioned three-dimensional network structure) may be used as the air cathode current collector.

On the other hand, examples of the above-mentionedmetallic material include stainless steel, nickel, aluminum, iron and titanium. In addition, examples of the air cathode current collector using the metallic material include metal mesh.

The average pore diameter of the air cathode current collector is not particularly limited if it has the size for supporting the conductive material; preferably, for example, within a range of 0.5 µm to 100 µm, above all, within a range of 1 µm to 50 µm, and in particular, within a range of 1.5 µm to 30 µm. The reason therefor is that too small pore diameter brings a possibility of hindering oxygen from diffusing, and too large pore diameter brings a possibility of being incapable of sufficiently supporting the conductive material. The voidage of the air cathode current collector is preferably, for example, within a range of 50% to 90%, above all, within a range of 60% to 87%, and in particular, within a range of 70% to 85%. The reason therefor is that too small voidage brings a possibility of hindering oxygen from diffusing, and too large voidage brings a possibility of being incapable of sufficiently performing current collecting. The thickness of the air cathode current collector is preferably, for example, within a range of 10 µm to 1000 µm, and above all, within a range of 20 µm to 400 µm.

### 3. Air cathode

The air cathode of the present invention is used for a nonaqueous air battery. A nonaqueous air battery is described in the after-mentioned "B. Nonaqueous air battery" in detail. A method for forming the air cathode of the present invention is not particularly limited if it is a method for forming the above-mentioned air cathode. One example of a method for forming the air cathode is a method for first preparing a composition for forming the air cathode layer, containing a conductive material, a catalyst, a binder, and a solvent, and then applying and drying this composition on the air cathode current collector. Examples of a method for applying the composition for forming the air cathode layer include a doctor blade method, a dip coating method, a spray method, a spraying method, and an ink-j et method. On the occasion of applying the composition for forming the air cathode layer, the adjustment of the amount of application (application thickness) and the number of application at one time allows the supporting amount of the conductive material to be changed.

The present invention also provides a method for producing the air cathode comprising the steps of: a preparing step of preparing a composition for forming the air cathode layer, containing at least a conductive material; an applying step of applying the composition for forming the air cathode layer on the air cathode current collector having porous structure so that the average supporting amount of the conductive material in a planar area of the air cathode is within a range of 0.3 mg/cm² to 9.0 mg/cm²; and a drying step of drying the applied composition for forming the air cathode layer.

Another example of a method for forming the air cathode includes a method for mixing a conductive material, a catalyst, and a binder to prepare a composition for forming the air cathode layer, which is molded into pellets to stick the obtained pellets on the air cathode current collector.

### B. Nonaqueous air battery

Next, a nonaqueous air battery of the present invention is described. A nonaqueous air battery of the present invention comprises the above-mentioned air cathode, an anode, and a nonaqueous liquid electrolyte.

FIG. 2 is a schematic cross-sectional view showing one example of a nonaqueous air battery of the present invention. A nonaqueous air battery 20 shown in FIG. 2 comprises: an anode case 11a, an anode current collector 12 formed on the inside bottom face of the anode case 11a, an anode lead 12a connected to the anode current collector 12, an anode layer 13 containing an anode active material and formed on the anode current collector 12, an air cathode layer 14, an air cathode current collector 15 for performing current collecting of the air cathode layer 14, an air cathode lead 15a connected to the air cathode current collector 15, a separator 16 disposed between the anode layer 13 and the air cathode layer 14, a nonaqueous liquid electrolyte 17, an air cathode case 11b having a microporous membrane 18, and a packing 19 formed between the anode case 11a and the air cathode case 11b. The present invention is greatly **characterized in that** the above-mentioned air cathode is used for an air cathode composed of the air cathode layer 14 and the air cathode current collector 15.

According to the present invention, the use of the above-mentioned air cathode provides a nonaqueous air battery excellent in discharged capacity per unit area of the air cathode.
The nonaqueous air battery of the present invention is hereinafter described in each configuration.

### 1. Air cathode

The air cathode of the present invention is the same as the contents described in the above-mentioned "A. Air cathode", so that the description thereof is omitted herein.

### 2. Anode

The anode of the present invention ordinarily has an anode layer containing an anode active material and an anode current collector for performing current collecting of the anode layer.

### (1) Anode layer

The anode layer of the present invention contains at least an anode active material. Examples of an anode active material include metal alone, alloys, metallic oxides, and metallic nitrides. Examples of the above-mentioned metal ions include alkali metal ions. In addition, examples of the above-mentioned alkali metal ions include Li ions, Na ions, and K ions, and above all, preferably, Li ions. The reason therefor is that a battery with high energy density can be obtained.

Examples of alloys having lithium element include lithium-aluminum alloy, lithium-tin alloy, lithium-lead alloy, and lithium-silicon alloy. Examples of metallic oxides having lithium element include lithium-titanium oxide. Examples of metallic nitrides having lithium element include lithium-cobalt nitride, lithium-iron nitride, and lithium-manganese nitride.

The anode layer of the present invention may contain only an anode active material, or at least one of a conductive material and a binder in addition to an anode active material. For example, in the case where an anode active material is in the shape of foil, the anode layer containing only an anode active material is allowed. On the other hand, in the case where an anode active material is in the shape of powder, the anode layer having a conductive material and a binder is allowed. A conductive material and a binder are the same as the contents described in the above-mentioned "A. Air cathode", so that the description thereof is omitted herein. The thickness of the anode layer is preferably selected properly in accordance with the configuration of an intended nonaqueous air battery.

### (2) Anode current collector

The anode current collector of the present invention performs current collecting of the anode layer. Materials for the anode current collector are not particularly limited if it has electrical conductivity; examples thereof include copper, stainless steel, and nickel. Examples of the shape of the above-mentioned anode current collector include foil, plate, and mesh (grid). In the present invention, the after-mentioned battery case may also have the function of the anode current collector. The thickness of the anode current collector is preferably selected properly in accordance with the configuration of an intended nonaqueous air battery.

### (3) Method for forming anode

A method for forming the anode of the present invention is not particularly limited if it is a method capable of forming the above-mentioned anode. One example of the method for forming the anode is a method for disposing and pressurizing an anode active material in the shape of foil on the anode current collector. Another example of the method for forming the anode is a method for preparing a composition for forming the anode layer, containing an anode active material and a binder, and then applying and drying this composition on the anode current collector.

### 3. Nonaqueous liquid electrolyte

The nonaqueous liquid electrolyte of the present invention performs ion conduction between the air cathode layer and the anode layer. In the present invention, the whole air cathode layer is preferably soaked in the nonaqueous liquid electrolyte. The reason therefor is that electrode reaction may be efficiently caused in the air cathode layer.

The kinds of the nonaqueous liquid electrolyte are preferably selected properly in accordance with the kinds of metal ions to be conducted. For example, the nonaqueous liquid electrolyte of a lithium air battery ordinarily contains a lithium salt and a nonaqueous solvent. Examples of the lithium salt include inorganic lithium salts such as LiPF₆, LiBF₄, LiClO₄ and LiAsF₆; and organic lithium salts such as LiCF₃SO₃, LiN(CF₃SO₂)₂, LiN(C₂F₅SO₂)₂, and LiC(CF₃SO₂)₃. Examples of the nonaqueous solvent include ethylene carbonate (EC), propylene carbonate (PC), dimethyl carbonate (DMC), diethyl carbonate (DEC), ethylmethyl carbonate (EMC), butylene carbonate, γ-butyrolactone, sulfolane, acetonitrile, 1,2-dimethoxymethane, 1,3-dimethoxypropane, diethyl ether, tetrahydrofuran, 2-methyltetrahydrofuran, and mixtures thereof. The nonaqueous solvent is preferably a solvent high in oxygen solubility. The reason therefor is that the dissolved oxygen may be efficiently used for reaction.

The concentration of the lithium salt in the nonaqueous liquid electrolyte is, for example, within a range of 0.5 mol/L to 3 mol/L. In the present invention, low-volatile liquid such as ionic liquid may be used as the nonaqueous liquid electrolyte.

### 4. Battery case

The shape of the battery case of the present invention is not particularly limited if it can accommodate the above-mentioned air cathode, anode, and nonaqueous liquid electrolyte; specific examples thereof include coin type, flat plate type, cylindrical type, and laminate type, and preferably flat plate type and laminate type. The battery case may be a battery case of an air open type or of a hermetically-sealed type. The battery case of an air open type is a battery case capable of contacting with the air as shown in the above-mentioned FIG. 2. On the other hand, when the battery case is of a hermetically-sealed type, it is preferably provided with a gas inlet tube and an exhaust pipe of gas (air). In this case, air introduced and exhausted is preferably high in oxygen concentration, and more preferably pure oxygen. It is preferable that oxygen concentration is raised during the discharge and oxygen concentration is lowered during the charge.

### 5. Nonaqueous air battery

The nonaqueous air battery of the present invention preferably has a separator between the air cathode layer and the anode layer. Thereby a nonaqueous air battery with higher safety can be obtained. Examples of the separator include porous membranes such as polyethylene and polypropylene; and nonwoven fabrics such as resin nonwoven fabric and glass fiber nonwoven fabric. The thickness of the separator is preferably selected properly in accordance with factors such as the uses of the nonaqueous air battery.

The kinds of the nonaqueous air battery of the present invention vary with the kinds of metal ions used as conductive ions. Examples of the above-mentionedmetal ions include alkali metal ions. In addition, examples of the above-mentioned alkali metal ions include Li ions, Na ions, and K ions, and above all, preferably, Li ions. The reason therefor is that a battery with high energy density can be obtained. The nonaqueous air battery of the present invention may be a primary battery or a secondary battery, and above all, preferably, a secondary battery. Thereby a nonaqueous air battery useful for mounting on vehicles can be obtained, for example. Examples of uses of the nonaqueous air battery of the present invention include vehicle mounting use, stationary power source use, and domestic power source use. In addition, a method for forming the nonaqueous air battery of the present invention is not particularly limited and the same method as to that for a general nonaqueous air battery may be used.

The present invention is not limited to the above-mentioned embodiments. The above-mentioned embodiments are examples, and any is included in the technical scope of the present invention if it has substantially the same constitution as the technical idea described in the claims of the present invention and produces the same function and effect.

### EXAMPLES

The presentinventionisdescribed morespecifically while referring to examples hereinafter.

### [Production Examples 1 to 14]

85 parts by weight of ketjen black (manufactured by Ketjen Black International Company, an average primary particle diameter of 0.05 µm), 15 parts by weight of ground electrolytic manganese dioxide (manufactured by Kojundo Chemical Laboratory Co., Ltd. , an average particle diameter of 5 µm), and 100 parts by weight of PVDF solution (manufactured by Kureha Corporation) were mixed, and NMP (N-methylpyrrolidone, manufactured by Kanto Chemical Co., Inc.) was added thereto and mixed by a kneader to thereby obtain a composition for forming an air cathode layer. Thereafter, the composition for forming an air cathode layer was applied on carbon paper (an air cathode current collector, manufactured by Toray Industries Inc., TGP-H-090, a thickness of 0.28 mm) to remove the solvent by drying. Lastly, the obtained electrode was stamped into a diameter of 18 mm to obtain an air cathode. In applying the composition for forming an air cathode layer, the average supporting amount of a conductive material in the planar area was changed by changing the amount of application (application thickness) and the number of application at one time.

### [Production Examples 15 to 17]

In the case where the average supporting amount of a conductive material in the planar area was determined at 10 mg/cm² or more, an air cathode was produced by the following method. 82 parts by weight of ketjen black, 15 parts by weight of electrolytic manganese dioxide, and 3 parts by weight of PTFE were kneaded in a zirconia mortar to obtain a composition for forming an air cathode layer. The same as Production Examples 1 to 14 were used for the ketj en black and electrolytic manganese dioxide. Next, the composition for forming an air cathode layer was molded into pellets with a diameter of 18 mm. Thereafter, the obtained pellets were stuck to nickel mesh (a thickness of 150 µm, a diameter of 18 mm) to obtain an air cathode. In producing the pellets, the average supporting amount of a conductive material in the planar area was changed by changing the used amount of the composition for forming an air cathode layer.

### [Examples 1 to 14]

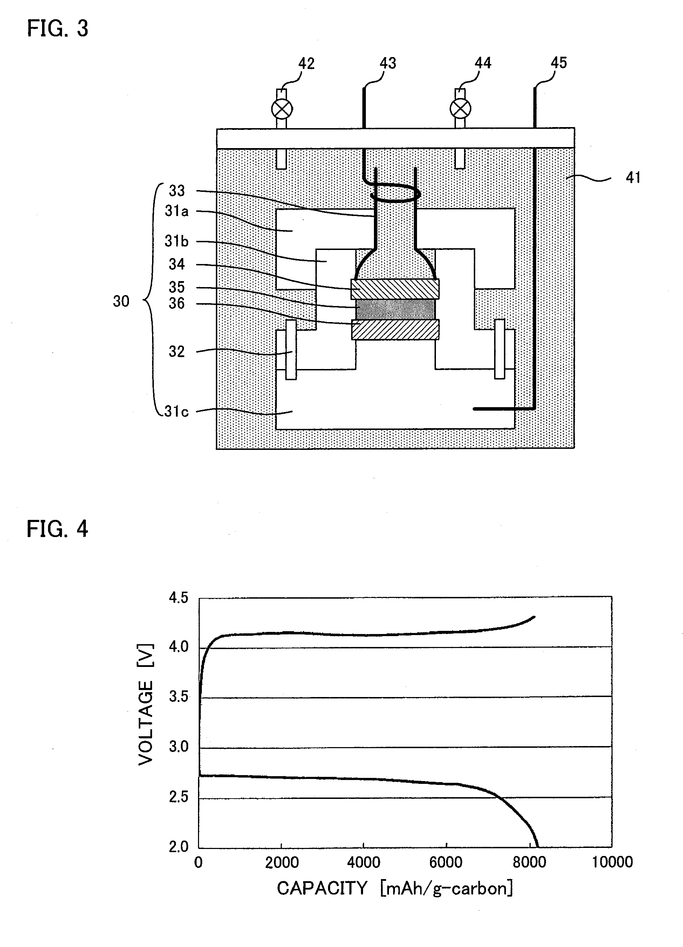

Evaluation cells were each produced by using the air cathodes obtained in Production Examples 1 to 14 (refer to FIG. 3). The batteries were all assembled in an argon box (a dew point of -40°C or less). First, a lithium air secondary battery 30 was produced. The lithium air secondary battery 30 has battery cases 31a and 31b made of Teflon (registered trademark) and a battery case 31c made of SUS. The battery case 31b and the battery case 31c are joined by a bolt 32. In addition, the battery case 31a has an opening for supplying oxygen, which opening is provided with a hollow current output 33. The air cathode obtained by the above-mentioned method was used for an air cathode 34, a nonaqueous liquid electrolyte such that (CF₃SO₂)₂NLi was dissolved with a concentration of 1M in propylene carbonate (PC) was used for a nonaqueous liquid electrolyte 35, and metallic lithium (manufactured by Kyokuto Kinzoku Co. , Ltd. , a thickness of 200 µm, a diameter of 19 mm) was used for an anode layer 36.

Next, an air cathode lead 43 was connected to the current output 33 made of SUS, an anode lead 45 was connected to the battery case 31c made of SUS, and the lithium air secondary battery 30 was accommodated in a glass vessel 41 with a capacity of 1000 cc. Thereafter, the glass vessel 41 was hermetically-sealed and the sealed glass vessel 41 was taken out of the argon box. Next, oxygen was introduced from a gas cylinder of oxygen through a gas inlet part 42, and simultaneously the exhaustion was performed from a gas exhaust part 44 to shift the inside of the glass vessel from an argon atmosphere to an oxygen atmosphere. Thus, the evaluation cells were obtained.

### [Comparative Examples 1 to 3]

Evaluation cells were obtained in the same manner as Example 1 except for using the air cathodes obtained in Production Examples 15 to 17.

### [Evaluations]

A charge and discharge test was performed by using the evaluation cells obtained in Examples 1 to 14 and Comparative Examples 1 to 3. The conditions of charge and discharge were as follows. The charge and discharge were started from discharge and performed by using a thermostat bath of 25 °C.
(1) to perform discharge at an electric current of 100 mA/(g-carbon) until the battery voltage reaches 2 V
(2) to pause for 1 hour after the discharge
(3) to perform charge at an electric current of 100 mA/(g-carbon) until the battery voltage reaches 4.3V after the pause
Here, the "g-carbon" denotes the weight of carbon (conductive material). The obtained results are shown in Table 1. In Table 1, the "average supporting amount of carbon" signifies the average supporting amount of carbon (conductive material) in the planar area of the air cathode. For reference, a charge and discharge curve of Example 5 is shown in FIG. 4.

**[Table 1]**

| | average supporting amount of carbon | discharged capacity per unit area | charging efficiency (charge capacity/ discharged capacity) |
|---|---|---|---|
| | [mg/cm²] | [mAh/cm²] | [%] |
| Example 1 | 0.34 | 16285 | 99.1 |
| Example 2 | 0.50 | 21178 | 99.4 |
| Example 3 | 1.02 | 22986 | 99.3 |
| Example 4 | 2.04 | 23729 | 99.1 |
| Example 5 | 2.94 | 23814 | 98.8 |
| Example 6 | 3.95 | 23305 | 98.1 |
| Example 7 | 4.45 | 23011 | 97.7 |
| Example 8 | 4.99 | 22071 | 97.4 |
| Example 9 | 5.46 | 20764 | 94.8 |
| Example 10 | 5.96 | 19102 | 94.4 |
| Example 11 | 6.99 | 18321 | 85.3 |
| Example 12 | 7.39 | 16280 | 72.8 |
| Example 13 | 7.98 | 15322 | 66.7 |
| Example 14 | 8.98 | 9815 | 59.1 |
| Comparative Example 1 | 11.49 | 6457 | 24.2 |
| Comparative Example 2 | 14.12 | 3389 | 15.0 |
| Comparative Example 3 | 16.95 | 2356 | 12.8 |

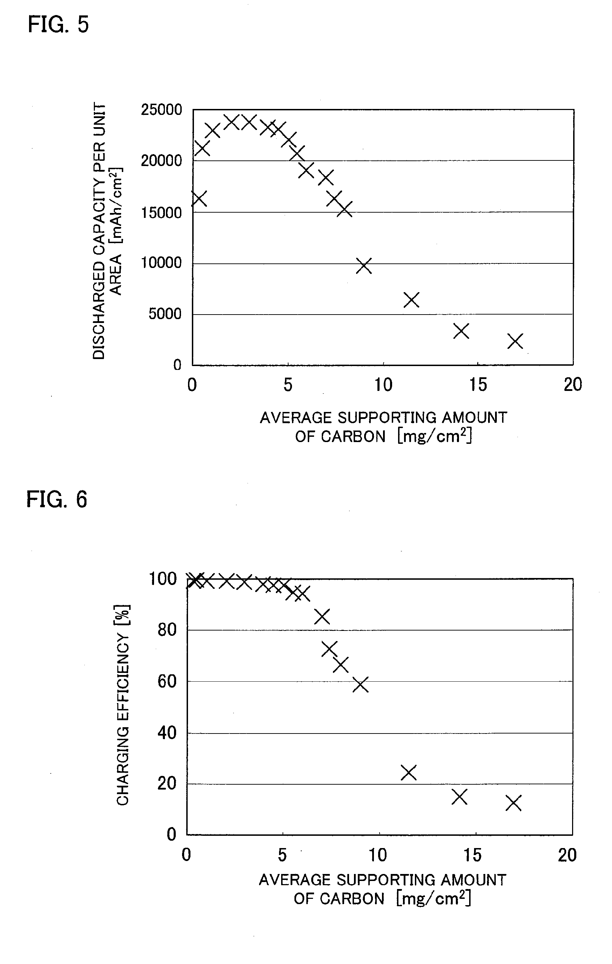

The results of discharged capacity per unit area in Table 1 are shown in FIG. 5 and the results of charging efficiency are shown in FIG. 6. As shown in FIG. 5, any of Examples 1 to 14 offered large discharged capacity as compared with Comparative Examples 1 to 3. Above all, it was confirmed that Examples 1 to 13 offered remarkably large discharged capacity as compared with Example 14. In particular, it was confirmed that Examples 2 to 9 offered discharged capacity more than 20000 mAh/cm². On the other hand, as shown in FIG. 6, Examples 1 to 14 offered excellent charging efficiency as compared with Comparative Examples 1 to 3. Above all, it was confirmed that Examples 1 to 10 offered as high charging efficiency as more than 94%.

## Claims

1. An air cathode used for a nonaqueous air battery, comprising:
an air cathode current collector having a porous structure, and
an air cathode layer containing a conductive material and formed on the air cathode current collector;
**characterized in that** an average supporting amount of the conductive material in a planar area of the air cathode is within a range of 0.3 mg/cm² to 9.0 mg/cm².

2. The air cathode according to claim 1, **characterized in that** an average supporting amount of the conductive material in a planar area of the air cathode is within a range of 0.5 mg/cm² to 8.0 mg/cm².

3. The air cathode according to claim 1 or 2, **characterized in that** the conductive material is a powder carbon material.

4. The air cathode according to any one of claims 1 to 3, **characterized in that** the air cathode current collector is a current collector using a carbon material.

5. A nonaqueous air battery **characterized by** comprising the air cathode according to any one of claims 1 to 4, an anode, and a nonaqueous liquid electrolyte.
